# EUROPEAN PATENT SPECIFICATION

(11) **EP 3 515 184 B1**
(45) Date of publication and mention of the grant of the patent: **06.11.2024**
(21) Application number: 17777780.2
(22) Date of filing: 21.09.2017
(51) Int. Cl.: B63B 35/16, A01K 73/045

(54) **SPREADING DEVICE WITH INCREASED LIFT**
STREUVORRICHTUNG MIT ERHÖHTEM HUB
DISPOSITIF D'ÉCARTEMENT À PORTANCE ACCRUE

(30) Priority: 21.09.2016 DK PA201670748
(43) Date of publication of application: 31.07.2019
(73) Proprietor: Thyborøn Skibssmedie A/S, 7680 Thyborøn (DK)
(72) Inventor: ANDREASEN, Peder Stausholm, 7680 Thyborøn (DK); JENSEN, Pétur, 7680 Thyborøn (DK)
(74) Representative: Patrade A/S
(86) International application number: PCT/DK2017/050305
(87) International publication number: WO 2018/054443

(56) References cited:
- AU-B2- 604 183
- JP-U- S5 432 289
- US-A1- 2011 308 134

## Description

### Field of the Invention

The present invention relates to a spreading device used in trawl fishing, seismic survey operations and other water activities where it is desirable to keep distance between two sides of a towed device.

### Background of the Invention

In trawl fishing a spreading device is used to control the opening of the fishing trawl and in seismic surveys in order to maintain a distance between the lines pulling the seismic survey devices in order to obtain as broad a survey zone as possible.

From WO2013014507 is known a spreading device comprising two foils arranged such that a flow channel is created between the two foils as the spreading device is towed through the water, as described in the document. A number of other prior art documents disclose similar foil arrangements.

A further example is known from AU 604183 wherein is disclosed a spreading device with a number of flat foils arranged at an angle relative to the pulling/towing direction. The foils are arranged such than in use the flat foils will be arranged substantially vertically between a lower shoe and an upper shoe. At distal rear edges (relative to the direction of motion during use) of the foils the plate material from which the foils are manufactured are bent back creating spoilers along trailing edges of the foils.

### Object of the Invention

Below the invention will be discussed with reference to a trawl door, but it shall be understood that the principles and the increased spreading effect obtained with the present invention also applies to other devices or industries where it is interesting to pull a device be it a fishing net, a seismic survey device or the like through the water and obtain a spreading effect between the pulling wires connecting the boat to the spreading devices in the water.

### Description of the Invention

For trawl fishing one of the main issues is to obtain the desired spreading effect while the trawl doors cause the least resistance through the water. When talking about spreading effect, this will be referred to as the trawl door's lift, i.e. the trawl door's ability to travel sideways with respect to the forward pull through the water. One way of obtaining this is to arrange the attachment point of the pulling wire from the boat to the trawl door such that the trawl door will be arranged at an oblique angle to the pulling direction thereby urging the trawl door to travel sideways.

Due to the oblique angle of the trawl door relative to the pulling direction a substantial resistance is created and therefore increased force is needed by the pulling boat in order to pull the trawl through the water at a desired speed and at the same time obtain the spreading of the trawl opening such that the trawl's fishing capabilities are achieved.

In the art the trawl doors have further been improved by arranging various foils in the trawl doors such that a number of channels are created allowing the water to stream through the trawl door, but at the same time urging the trawl door sideways relative to the pulling direction. This of course decreases the resistance and thereby the force needed to pull the trawl doors through the water, but still a significant resistance is present when using trawl doors and at the same time when it is desired to have a substantial spread between the pulled trawl doors in order to open the trawl to achieve optimum fishing capabilities.

To this problem the invention presents a spreading device which provides extra lift, i.e. extra spreading force without increasing the pulling force and as such provides increased efficiency with less use of pulling force.

The invention achieves this by a spreading device for trawl fishing, seismic survey operations and other water activities where it is desirable to keep distance between two sides of a towed device, said spreading device comprising the features of independent claim 1. Preferred embodiments of the invention are set out in the dependent claims.

Due to the provision of the bulb, the water speed on the two sides of the spreading device will be different. The bulb will cause the water to travel longer, and consequently due to the bulb an under-pressure will occur on the aft side of the bulb. This under-pressure will create lift, such that the spreading device will be urged in the direction of the bulb.

The spreading device has at least one section, which at least one section comprises at least two foils, in use a front foil and a rear foil, where both foils has a front surface and a rear surface, said surfaces each being defined by two edges and two side limitations, in use being front and rear edges and upper and lower side limitations and a material thickness between said front and rear surfaces. In this manner between the rear surface of the front foil and the front surface of the rear foil is defined a channel between said two foils, where a predetermined distance from the front edge, on the front surface inside the channel, is provided a bulb at least spanning a majority of the distance between the upper and lower side limitations.

Extensive testing, as is evident from table 1 below has clearly indicated that by providing a bulb as described above clearly increases the spreading device's lift ability and thereby its spreading ability without increasing the needed pulling force such that increased spreading is obtained with use of less energy, e.g. less pulling force.

The bulb is mounted extending from a front surface inside the channel in order to limit the cross section of the water flow area through the channel created between the rear side of a front foil and the front side of a rear foil such that water is forced to increase speed going through the channel thereby creating the extra lift.

Within the context of this description and claims as well as the figures the term bulb shall be understood to be a member having an extent in three dimensions such that the bulb will have length, a depth and also a thickness. The length is to be understood as a length for at least a part of the distance from the front to the rear of the foil and the thickness may/will vary along the depth, but will extend in use from the surface of the front side of a foil such that the channel in which the bulb is mounted in the area where the bulb is present has a diminished water flow area.

Extensive testing in tanks has indicated that various configurations of the aspect ratios between the various dimensions of the bulb have various effects as is evident from the table below.

Consequently, in some preferred embodiments of the invention the bulb reduces the distance between the front surface of the rear foil to the rear surface of the front foil by between 3% to 30 %, more preferred 5% to 25% most preferred 7% to 20% where the distance perpendicular to the foil surface to the bulb is shortest.

According to the invention, and with respect to the arrangement of the bulb on the rear foil, the front of the bulb is displaced between 2% and 30% of the distance between the foils edges from the front edge, more preferred 5% to 25% of the distance between the foils edges from the front edge and most preferred 10% to 18% of the distance between the foils edges, from the front edge of the foil.

In a further advantageous embodiment the bulb has a front edge and a rear edge, substantially parallel to the edges of the foil, and where the distance between the bulb's front and rear edge is between 10% to 50%, more preferred 15% to 45%, and most preferred 20% to 30% of the distance between the foils front and rear edges.

Naturally the shape of the bulb is also important in order to achieve an optimum flow through the channel and thereby achieve the desired lift, and therefore the bulb in a further advantageous embodiment has an upper side and a lower side, said lower side being flush with the front surface of the foil, and said upper side in a cross-section perpendicular to the front surface of the foil, between the front and rear edge of said bulb has either a convex curvature shape, a triangular shape, part of a circle or ellipse or a combination of geometrical figures.

As the invention has influence on the water flow in one channel limited between two adjacent foils and there will create an extra lift compared to not having a bulb in the channel, the invention is also usable and will create extra lift where the spreading device has more than two foils creating two or more channels where each channel is provided with a bulb.

Likewise, by adding more sections to the spreading device, a linear increase corresponding to the number of channels providing added lift will be achieved such that by adding two sections double lift will be achieved, three sections will triple the lift etc.

### Description of the Drawing

The invention will now be described with reference to the accompanying drawings wherein
- Figure 1: illustrates a fishing vessel having two lines connected to a trawl
- Figure 2a and b and 3a and b: illustrates plain views of a typical simple trawl door
- Figure 4: illustrated a prior art trawl door
- Figure 5: illustrates the water flow through the channels

### Detailed Description of the Invention

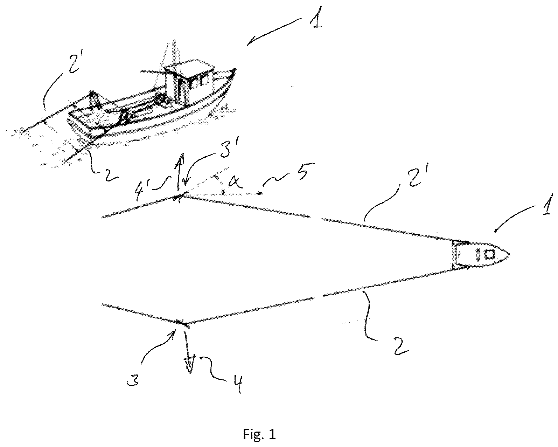

In figure 1 is illustrated a fishing vessel 1 having two lines 2, 2' connected to a trawl (not illustrated). In order to keep the trawl spread out such that it will have an active opening larger than the back of the fishing vessel's stern 1 trawl doors 3, 3' are arranged on the wires 2, 2'.

By arranging the trawl doors 3, 3' at an oblique angle α relative to the pulling direction 5 it is achieved that the trawl doors 3, 3' will be urged outwards as indicated by the arrows 4, 4'.

By arranging the trawl doors 3, 3' at an oblique angle α an increased drag is put on the wires 2, 2' such that the fishing vessel must exert more force in order to pull the trawl.

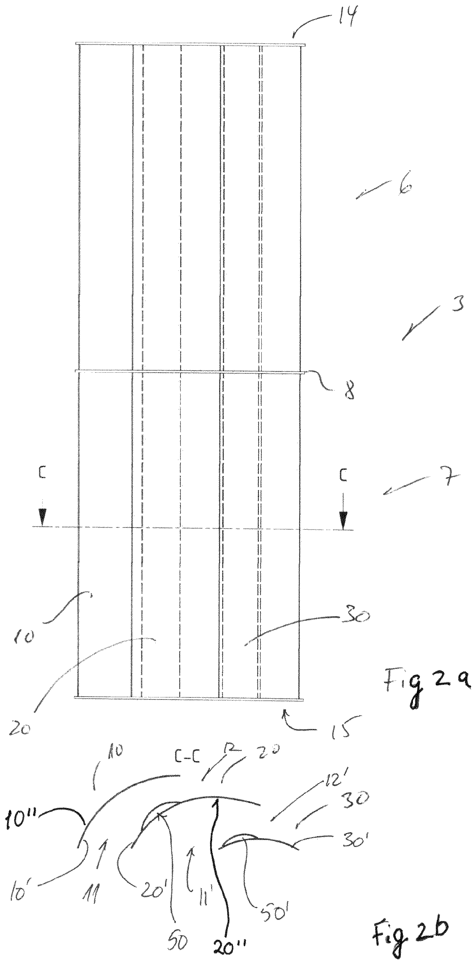

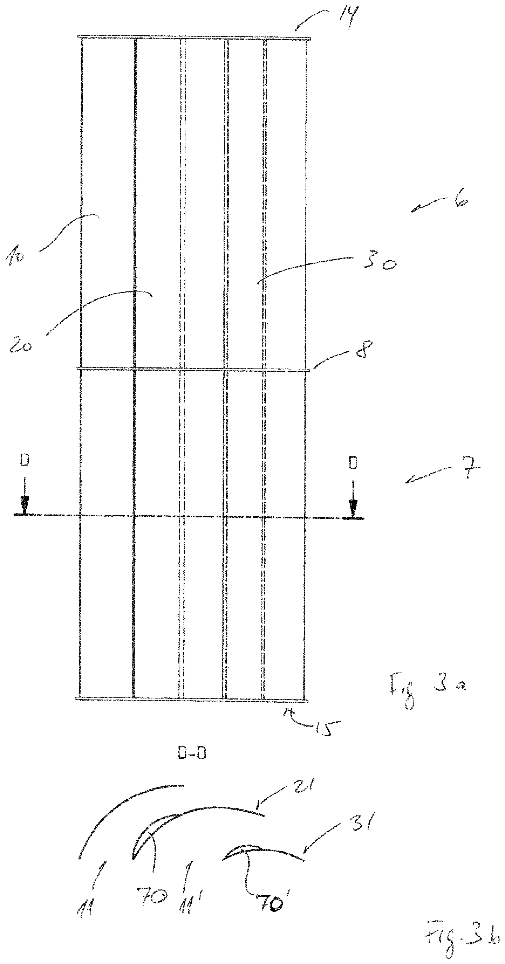

In figure 2 and 3 are illustrated plain views of a typical simple trawl door. In the examples the trawl doors comprise two sections 6, 7 where the sections are connected at 8. Each section has three foils 10, 20, 30, see figure 2b. In this context the foil 10 will be denoted the front foil and the foil 20 the rear foil with respect to the channel 11 delimited by the rear surface 10' of the front foil 10 and the front surface 20' of the rear foil 20.

Each foil 10, 20, 30 has a front edge and a rear edge where the front edges are at the channel openings 11, 11' and the rear edges adjacent the channel outflows 12, 12'. In the illustrative embodiment illustrated in figures 2a,b and 3a,b three foils are provided thereby creating two channels 11, 11' having similar definitions with respect to the surfaces as already explained above with reference to the channel 11 between the front foil 10 and a rear foil 20.

Where the second channel 11' is concerned, the foil 20 is to be considered as the front foil and the foil 30 as the rear foil delimiting the channel 11' in the same manner as the channel 11 is delimited by the front foil 10 and the rear foil 20. In the channel 11, 11' between two foils 10, 20 or 20, 30 at a predetermined distance from the front edge on the front surface 20', 30' inside the channel 11, 11' is provided a bulb 50, 50'.

In a likewise manner more/additional foils may be added.

The plain view of a trawl door as illustrated in figure 2a and 3a comprises two sections 6, 7 which have side limitations for each section. A common side limitation is the assembly flange 8 for the two sections 6,7, but in upper and lower ends further side limitations 14, 15 are provided.

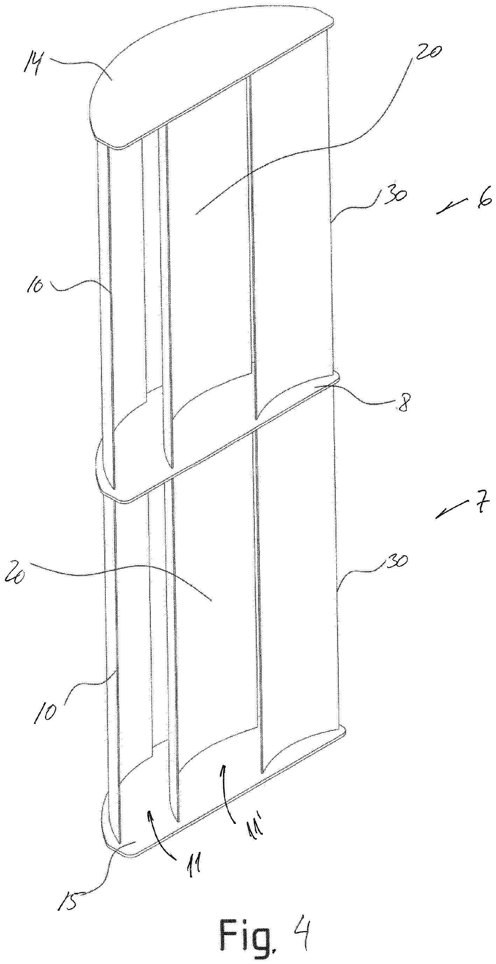

In figure 4 is illustrated a prior art trawl door with more or less the same construction as the present invention, but without the bulbs in order to illustrate in an asymmetric view the various prior art features also present with the present invention.

The bulb 50, 50' is arranged on the front surface 20', 30' of the rear foils 20, 30 and covers at least a major part of the foils 20, 30 between the side limitations 8, 14 and 8, 15.

In figure 3a and 3b is illustrated a trawl door substantially identical to the trawl door described above with reference to figures 2a and 2b. The difference, however, between the two embodiments is clearly identifiable when comparing figures 2b and 3b. The position of the bulbs 50, 50', 70, 70' relative to the front edges of the rear foils 21, 31 is different thereby creating a different water flow through the channels 11, 11'.

Furthermore, the sizes of the bulbs 70, 70' is different from the bulbs 50, 50' described with respect to the embodiment related to figure 2b. It is clear that the trawl doors in the two different embodiments relating to figures 2a and 3a will provide a different lift and that further modifications, i.e. by placing the bulb at other positions on the surfaces of the foils and the physical size and geometrical shape of the foils may be varied and still create different lift conditions.

These different lift conditions are interesting for different types of tasks which the trawl doors are designed to solve. For example relatively shallow bulbs may be used at higher speed and still create a very distinct extra lift compared to a trawl door without the bulbs whereas for lower speeds and thereby lower water speeds through the channels 11, 11' thicker bulbs, i.e. bulbs that will reduce the distance between the front foil and the rear foil, i.e. the cross-flow area of the channel 11 may be used.

Also depending on the angle α, see figure 1, which it is desired to arrange the trawl doors at, will have an impact on the size and position of the bulbs such that for each desired situation a particular foil design with respect to the position of the bulb on the top surface, the bulb's extent between the front edge and rear edge of the foil and the thickness of the foil may be determined specifically for particular tasks.

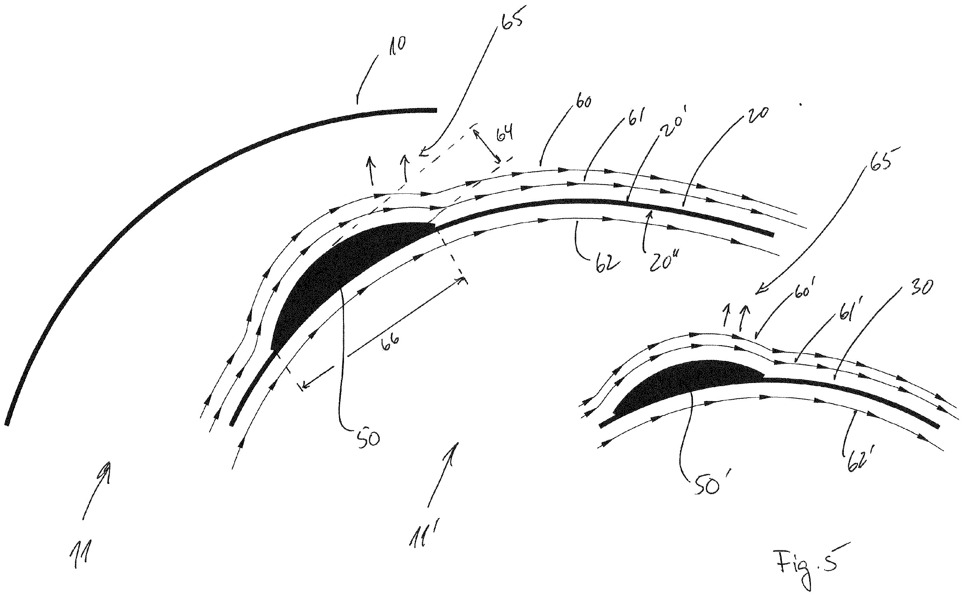

In figure 5 the water flow through the channels 11, 11' is illustrated. For illustrative purposes only flow lines 60-62 are illustrated, but naturally the entire water flow cross the section of the channels 11, 11' will be effected by the bulbs 50, 50'. From this illustration it is clear that the water flow in the channels 11, 11' where the bulb 50, 50' is positioned is influenced by the bulb 50, 50', see the water-flow lines 60, 61, 60', 61' whereas the water-flow along the rear-side of the foil 20, 30 indicated by water-flow lines 62, 62' is more or less unaffected.

Consequently, as the water speed in the channels 11, 11' is forced to be increased due to the bulb 50, 50', the bulb will create an extra lift indicated by the arrows 65 whereby the overall trawl door is provided with extra lift as compared to for example the trawl door illustrated with reference to figure 4.

In the examples illustrated in figure 5 the height 64 of both bulbs 50, 50' is 16% of the length 66 of the bulb. This causes with respect to the foil 20 that the water travelling along the front surface 20' of the foil, for example illustrated by flow-line 61 has to travel a distance which is 6.4% longer than the water flow 62 along the rear-side 20" of the same foil.

With respect to the rear foil 30 the extra distance the water-flow 61' has to travel with the same bulb construction 50' as the bulb 50 is 9.13% longer.

In table 1 are listed actual test results for a scale model of a trawl door tested with the present invention. The result listed with reference 1 is the trawl door where a bulb has been mounted and the results listed under 2 is the same trawl door without the bulb.

| | 1 | | | 2 | | |
|---|---|---|---|---|---|---|
| | Model with bulb | | | Model without bulb. | | |
| AOA | CL | CD | CL/CD | CL | CD | CL/CD |
| 24.6 | 1.8 | 0.3 | 6.00 | 1.74 | 0.43 | 4.05 |
| 27.6 | 2.22 | 0.34 | 6.53 | 2.14 | 0.52 | 4.12 |

The column headed by "AOA" indicates the angle of attack, that is to say the angle of the trawl door relative to the travelling direction, and the column headed by "CL" indicates the lift force and the column headed by "CD" indicates the resistance, i.e. extra drag when the trawl door is travelling through the water. The third column headed by "CL/CD" gives an over-all ration of the efficiency of the trawl door such that it is possible to directly compare a trawl door with a bulb and a trawl door without a bulb.

It is clear from the test results that there is a significant increase in the efficiency typically in the range 30-50% for trawl doors with a bulb as compared to trawl doors without a bulb. The efficiency is, as already stated in the introduction of the description a combination of the extra lift combined with less drag resistance through the water and as such less resistance requires less energy an increased lift at the same time provides for added efficiency as well.

## Claims

1. A spreading device (3,3') for trawl fishing, seismic survey operations and other water activities where it is desirable to keep distance between two sides of a towed device, said spreading device (3,3') having at least one section (6,7), where each section (6,7) has at least two foils (10,20,30), in use a front foil (10) and a rear foil (20), where both foils (10,20) has a front surface (10",20') and a rear surface (10',20"), said surfaces (10',10",20',20") each being defined by two edges and two side limitations (8,14,15), in use being front and rear edges and upper and lower side limitations and a material thickness between said front and rear surfaces, such that between the rear surface (10') of the front foil (10) and the front surface (20') of the rear foil (20) is defined a channel (11,11') between said two foils (10,20),
**characterized in that** at a predetermined distance from the front edge, on the front surface (20') of the rear foil (20) inside the channel (11,11'), is provided a bulb (50) at least spanning a majority of the distance between the upper and lower side limitations (8,14 15), wherein the front of the bulb is displaced between 2% and 30% of the distance between the foils edges from the front edge of the rear foil (20), more preferred 5% to 25% of the distance between the foils edges from the front edge of the rear foil (20), and most preferred 10% to 18% of the distance between the foils edges, from the front edge of the rear foil.

2. A spreading device according to claim 1 wherein the bulb (50,50',70,70') reduces the distance (64) between the front surface (20') of the rear foil (20) to the rear surface (10') of the front foil (10) by between 3% to 30 %, more preferred 5% to 25% most preferred 7% to 20% where the distance (64) perpendicular to the foil (10') surface to the bulb (50) is shortest.

3. A spreading device according to claim 1 wherein the bulb has a front edge and a rear edge, substantially parallel to the edges of the foil, and where the distance between the bulb's front and rear edge is between 10% to 50%, more preferred 15% to 45%, and most preferred 20% to 30% of the distance between the foils front and rear edges.

4. A spreading device according to claim 1 -2- wherein the bulb has an upper side and a lower side, said lower side being flush with the front surface of the foil, and said upper side in a cross-section perpendicular to the front surface of the foil, between the front and rear edge of said bulb has either a convex curvature shape, a triangular shape, part of a circle or ellipse or a combination of geometrical figures.

5. A spreading device according to any of claims 1 to 4 wherein more than two foils (10,20,30) are provided, creating two or more channels (11,11'), where each channel (11,11') is provided with a bulb.

6. A spreading device according to claim 1 wherein the trawl door comprises two or more sections (6,7), the sections (6,7), in use arranged one on top of the other.

## Patentansprüche

1. Streuvorrichtung (3, 3') für Schleppnetzfischerei, seismische Vermessungsvorgänge und andere Wasseraktivitäten, bei denen es wünschenswert ist, Abstand zwischen zwei Seiten einer gezogenen Vorrichtung zu halten, wobei die Streuvorrichtung (3, 3') mindestens einen Abschnitt (6, 7) aufweist, wobei jeder Abschnitt (6, 7) mindestens zwei Folien (10, 20, 30) aufweist, im Gebrauch eine Vorderfolie (10) und eine Rückfolie (20), wobei beide Folien (10, 20) eine Vorderfläche (10", 20') und eine Rückfläche (10', 20") aufweisen, wobei die Flächen (10', 10", 20', 20") jeweils durch zwei Kanten und zwei Seitenbegrenzungen (8, 14, 15) definiert sind, die im Gebrauch eine Vorder- und eine Rückkante sowie eine obere und eine untere Seitenbegrenzung und eine Materialdicke zwischen der Vorder- und der Rückfläche sind, sodass zwischen der Rückfläche (10') der Vorderfolie (10) und der Vorderfläche (20') der Rückfolie (20) ein Kanal (11, 11') zwischen den beiden Folien (10, 20) definiert ist,
**dadurch gekennzeichnet, dass**
in einem vorbestimmten Abstand von der Vorderkante auf der Vorderfläche (20') der Rückfolie (20) innerhalb des Kanals (11, 11') ein Kolben (50) bereitgestellt ist, der mindestens einen Großteil des Abstands zwischen den oberen und unteren Seitenbegrenzungen (8, 14, 15) überspannt, wobei die Vorderseite des Kolbens zwischen 2 % und 30 % des Abstands zwischen den Folienkanten von der Vorderkante der Rückfolie (20) versetzt ist,
bevorzugt 5 % bis 25 % des Abstands zwischen den Folienkanten von der Vorderkante der Rückfolie (20),
und am meisten bevorzugt 10 % bis 18 % des Abstandes zwischen den Folienkanten, von der Vorderkante der Rückfolie.

2. Streuvorrichtung nach Anspruch 1, wobei der Kolben (50, 50', 70, 70') den Abstand (64) zwischen der Vorderfläche (20') der Rückfolie (20) und der Rückfläche (10') der Vorderfolie (10) um 3 % bis 30 %, bevorzugt 5 % bis 25 %, am meisten bevorzugt 7 % bis 20 %, verringert, wobei der Abstand (64) senkrecht zur Oberfläche der Folie (10') zum Kolben (50) am geringsten ist.

3. Streuvorrichtung nach Anspruch 1, wobei der Kolben eine Vorderkante und eine Rückkante aufweist, die im Wesentlichen parallel zu den Kanten der Folie verlaufen, und wobei der Abstand zwischen der Vorder- und der Rückkante des Kolbens zwischen 10% bis 50 %, bevorzugt 15 % bis 45 % und am meisten bevorzugt 20 % bis 30 % des Abstands zwischen der Vorder- und der Rückkante der Folie beträgt.

4. Streuvorrichtung nach Anspruch 1, wobei der Kolben eine Oberseite und eine Unterseite aufweist, wobei die Unterseite mit der Vorderseite der Folie bündig ist und die Oberseite in einem Querschnitt senkrecht zur Vorderseite der Folie zwischen der Vorder- und Rückkante des Kolbens entweder eine konvexe Krümmungsform, eine Dreiecksform, einen Teil eines Kreises oder einer Ellipse oder eine Kombination von geometrischen Figuren aufweist.

5. Streuvorrichtung nach einem der Ansprüche 1 bis 4, wobei mehr als zwei Folien (10, 20, 30) bereitgestellt sind, die zwei oder mehr Kanäle (11, 11') bilden, wobei jeder Kanal (11, 11') mit einem Kolben bereitstellt ist.

6. Streuvorrichtung nach Anspruch 1, wobei das Schlepptor zwei oder mehr Abschnitte (6, 7) umfasst, wobei die Abschnitte (6, 7) im Gebrauch übereinander angeordnet sind.

## Revendications

1. Dispositif d'écartement (3, 3') pour la pêche au chalut, opérations de prospection sismique et autres activités nautiques où il est souhaitable de maintenir une distance entre deux côtés d'un dispositif remorqué, ledit dispositif d'écartement (3, 3') présentant au moins une section (6, 7), où chaque section (6, 7) présente au moins deux feuilles (10, 20, 30), lors de l'utilisation une feuille avant (10) et une feuille arrière (20), où les deux feuilles (10, 20) présentent une surface avant (10", 20') et une surface arrière (10', 20"), lesdites surfaces (10', 10", 20', 20") étant chacune définies par deux bords et deux limites latérales (8, 14, 15), lors de l'utilisation étant des bords avant et arrière et des limites latérales supérieure et inférieure et une épaisseur de matériau entre lesdites surfaces avant et arrière, de sorte qu'à ce qu'entre la surface arrière (10') de la feuille avant (10) et la surface avant (20') de la feuille arrière (20) est défini un canal (11, 11') entre lesdites deux feuilles (10, 20),
**caractérisé en ce que**
au niveau d'une distance prédéterminée du bord avant, sur la surface avant (20') de la feuille arrière (20) à l'intérieur du canal (11, 11'), est fourni un bulbe (50) couvrant au moins une majorité de la distance entre les limites latérales supérieure et inférieure (8, 14, 15), dans lequel l'avant du bulbe est décalé d'entre 2 % et 30 % de la distance entre les bords des feuilles depuis le bord avant de la feuille arrière (20),
de préférence d'entre 5 % et 25 % de la distance entre les bords des feuilles depuis le bord avant de la feuille arrière (20),
et de manière préférée entre toutes d'entre 10 % et 18 % de la distance entre les bords des feuilles, depuis le bord avant de la feuille arrière.

2. Dispositif d'écartement selon la revendication 1 dans lequel le bulbe (50, 50', 70, 70') réduit la distance (64) entre la surface avant (20') de la feuille arrière (20) et la surface arrière (10') de la feuille avant (10) d'entre 3 % et 30 %, de préférence d'entre 5 % et 25 % de manière préférée entre toutes d'entre 7 % et 20 % où la distance (64) perpendiculaire à la surface de la feuille (10') par rapport au bulbe (50) est la plus courte.

3. Dispositif d'écartement selon la revendication 1 dans lequel le bulbe présente un bord avant et un bord arrière, sensiblement parallèles aux bords de la feuille, et où la distance entre le bord avant et le bord arrière du bulbe est comprise entre 10 % et 50 %, de préférence entre 15 % et 45 % et de manière préférée entre toutes entre 20 % et 30 % de la distance entre les bords avant et arrière des feuilles.

4. Dispositif d'écartement selon la revendication 1 dans lequel le bulbe présente un côté supérieur et un côté inférieur, ledit côté inférieur étant au ras de la surface avant de la feuille, et ledit côté supérieur dans une section transversale perpendiculaire à la surface avant de la feuille, entre le bord avant et arrière dudit bulbe présente soit une forme de courbure convexe, soit une forme triangulaire, soit une partie d'un cercle ou d'une ellipse ou soit une combinaison de figures géométriques.

5. Dispositif d'écartement selon l'une quelconque des revendications 1 à 4 dans lequel plus de deux feuilles (10, 20, 30) sont fournies, créant deux canaux (11, 11') ou plus, où chaque canal (11, 11') est pourvu d'un bulbe.

6. Dispositif d'écartement selon la revendication 1 dans lequel le panneau de chalut comprend deux sections (6, 7) ou plus, les sections (6, 7), lors de l'utilisation étant agencées l'une sur l'autre.
